# FASCICULE DE BREVET EUROPEEN

(11) **EP 0 844 066 B1**
(45) Date de publication et mention de la délivrance du brevet: **13.02.2002**
(21) Numéro de dépôt: 97119790.0
(22) Date de dépôt: 12.11.1997
(51) Int. Cl.: B29D 30/34, B60C 9/02

(54) **Fabrication d'un renforcement pour pneumatique au moyen de deux demi-renforcements de carcasse**
Herstellung einer Reifenverstärkung mittels zweier Halbkarkassen
Manufacture of a tyre reinforcement using two half-carcasses

(30) Priorité: 21.11.1996 FR 9614357
(43) Date de publication de la demande: 27.05.1998
(73) Titulaire: Compagnie Générale des Etablissements MICHELIN-MICHELIN & CIE, 63040 Clermont-Ferrand Cedex 09 (FR)
(72) Inventeur: Gazuit, Georges, 03100 Montlucon (FR); Jara, Adam, 63000 Clermont-Ferrand (DE)
(74) Mandataire: Bauvir, Jacques

(56) Documents cités:
- EP-A- 0 658 449
- DE-A- 2 064 753
- FR-A- 2 376 762
- GB-A- 901 599
- US-A- 2 139 840

## Description

La présente invention concerne les pneumatiques. Plus particulièrement elle concerne la disposition des fils de renforcement dans les bourrelets et, plus généralement, elle concerne la réalisation de la carcasse.

Le renforcement de carcasse des pneumatiques est le plus souvent constitué par une ou plusieurs nappes, à l'heure actuelle en général radiales, retournées autour d'une ou de plusieurs tringles disposées dans les bourrelets. Les bourrelets constituent le moyen permettant de fixer le pneumatique sur la jante. Le fait que les renforcements de carcasse soient constitués par des nappes impose de réaliser celles-ci par calandrage, puis coupe à l'angle voulu (90° par rapport à la direction des fils pour une carcasse radiale) en morceaux de longueur voulue, puis assemblage des morceaux par soudure parallèle aux fils. Toutes ces opérations constituent des étapes de préparation distinctes de l'assemblage du pneumatique proprement dit. L'existence de ces étapes de préparation préalables complique la gestion des flux dans les ateliers de fabrication.

Aussi a-t-il déjà été proposé de réaliser la carcasse des pneumatiques à partir d'un seul fil. La difficulté dans ce cas réside dans la conception de carcasses qui soient suffisamment robustes pour remplir la fonction de structure de renforcement du pneumatique, et qui, par la trajectoire que forme le fil de carcasse, soient aussi aisées que possible à réaliser de façon mécanisée.

A titre d'illustration, on peut citer les propositions contenues dans les brevets US 4 277 295 et US 5 308 432. Cependant, la mécanisation des mouvements d'un organe de pose exécutant la première de ces propositions n'est pas simple. Par ailleurs, il est contre-indiqué d'avoir des noeuds ou des croisements de fils dans le bourrelet du pneumatique car la tension des fils dans cette zone est importante. Quant à la seconde proposition, elle présente l'inconvénient de la difficulté du transfert de la bobine d'une chaîne à l'autre de chaque côté du pneumatique. En outre, étant donné les volumes de la bobine et de ses organes d'animation, il n'est pas possible, ni dans la première proposition ni dans la seconde, de poser les derniers arceaux du renforcement de carcasse en poursuivant le même mouvement de déplacement de la dite bobine. En effet, en fin de pose, le mécanisme bute sur les premiers arceaux posés bien avant d'avoir posé les derniers, et ceci d'autant plus tôt que la bobine est volumineuse.

Or une telle bobine est en pratique assez volumineuse. Il est donc difficile de lui faire subir de nombreuses accélérations en raison de son poids et de son inertie, et il est difficile de lui faire contourner la tringle car l'espace disponible est faible, principalement si l'on fabrique le pneumatique sur un noyau correspondant sensiblement à son futur volume intérieur, et ceci d'autant plus que la tringle est proche de sa position finale dans le pneumatique.

L'objectif de l'invention est de proposer un nouveau renforcement de carcasse composé de deux éléments symétriques liés au sommet, que l'on réalise chacun à partir d'un seul fil, lequel présente la résistance mécanique et l'endurance requises. La réalisation de chaque demi-renforcement est obtenue par une technique simple, robuste, et d'utilisation flexible permettant l'exécution de demi-renforcements de dimensions différentes et/ou de types de fil ou natures de matériau différents. L'invention se fixe pour objectif une mécanisation des mouvements de la dite machine simple et flexible.

Selon l'invention, le procédé de fabrication d'un demi-renforcement de carcasse de pneumatique à partir d'un seul fil contournant une tringle, consiste à :
- maintenir ladite tringle de pneumatique,
- positionner un anneau à une distance prédéterminée de ladite tringle, de façon approximativement coaxiale, les plans de ladite tringle et dudit anneau étant sensiblement parallèles, ledit anneau comportant autant de crochets que le demi-nombre d'arceaux de fil de carcasse contenus dans le pneumatique que l'on souhaite fabriquer,
- accrocher le fil auxdits crochets grâce à des moyens de pose dudit fil en relation de guidage avec ledit fil, en formant une boucle dont les deux brins sont dirigés vers la tringle et la contournent, chacun des brins rejoignant le crochet adjacent au delà du contournement de la tringle,
- positionner un support définissant sensiblement la forme de la cavité interne dudit pneumatique de façon à ce que ladite tringle prenne sa place finale latéralement par rapport audit support, ledit support étant positionné par rapport à la tringle du côté opposé par rapport audit anneau,
- enlever lesdites boucles des crochets et les transférer sur le support.

Une machine mettant en oeuvre ledit procédé comporte :
- un dispositif central permettant de maintenir ladite tringle de pneumatique dans une position prédéterminée,
- un dispositif latéral destiné à recevoir un anneau comportant autant de crochets que le demi-nombre d'arceaux de fil de carcasse contenus dans le pneumatique que l'on souhaite fabriquer, ledit dispositif latéral maintenant ledit anneau à une distance prédéterminée de ladite tringle, de façon approximativement concentrique à celle-ci, les plans de ladite tringle et dudit anneau étant sensiblement parallèles, lesdits crochets étant répartis le long de la circonférence de l'anneau,
- des moyens de pose du fil pour accrocher le fil auxdits crochets en formant une boucle dont les deux brins sont dirigés vers la tringle et la contournent, chacun des brins rejoignant le crochet adjacent au delà du contournement de la tringle.

Dans le présent mémoire, le terme « fil » désigne en toute généralité, aussi bien des monofilaments que des multifilaments, ou des assemblages comme des câbles textiles ou métalliques, des retors ou bien encore n'importe quel type d'assemblage équivalent, comme par exemple des câbles hybrides, et ceci quelle que soient la ou les matières, le traitement éventuel de ces fils, par exemple traitement de surface ou enrobage, ou pré-encollage, pour favoriser l'adhésion sur le caoutchouc ou toute autre matière.

Par la présence de boucles au niveau de la bande de roulement, et par le contournement autour de la tringle, on voit que le renforcement de carcasse est construite à partir d'un fil unique. Bien entendu, le renforcement de carcasse pourrait ne pas être fabriqué de façon continue à partir d'un seul fil. Il pourrait y avoir une discontinuité du fil, par exemple due à un changement de bobine. Selon la présente invention, il convient cependant de n'utiliser qu'un seul fil ou un faible nombre de fils par renforcement de carcasse et il convient de disposer les débuts et fins de fils sous la bande de roulement pour éviter toute discontinuité dans la zone basse du bourrelet (noeuds par exemple).

Notons que la liaison entre les deux demi-renforcements de carcasse symétriques ne pose pas de problème lorsqu'elle se situe sous la bande de roulement car on sait que, à cet endroit, les efforts de tension dans les fils constituant le renforcement sont pratiquement nuls. La fabrication par demi-renforcements de la carcasse permet d'aboutir à une simplification de l'appareillage industriel nécessaire et permet d'obtenir une grande robustesse du procédé sur le plan industriel.

L'invention sera mieux comprise grâce à la description d'exemples de réalisation, à consulter avec les figures suivantes :
la figure 1 montre le renforcement de carcasse dans le pneumatique composé de deux demi-renforcements liés au sommet ;
la figure 2 montre un demi-renforcement dans un stade intermédiaire de la fabrication ;
la figure 3 montre une première variante d'une machine, à accrochage direct du fil, utilisant une bobine conique ;
la figure 4 est une autre vue, partielle, des organes principaux de la même machine ;
les figures 5a, 5b, 5c et 5d montrent schématiquement la fabrication d'un demi-renforcement avec l'utilisation d'une bobine conique ;
la figure 6 montre une deuxième variante d'une machine, à pré-positionnement du fil ;
la figure 7 est une autre vue, partielle, des organes principaux de la deuxième machine ;
la figure 8 montre un stade ultérieur de la fabrication du renforcement de carcasse, utilisable avec les deux variantes ;
la figure 9 montre la pose des demi-renforcements de carcasse à l'aide d'une paroi cylindrique élastique, utilisable avec les deux variantes ;
la figure 10 montre la pose des demi-renforcements carcasse à l'aide d'une vessie gonflable, utilisable avec les deux variantes ;
les figures 11a, 11b, 11c montrent les diverses méthodes de liaison au sommet des demi-renforcements de carcasse.

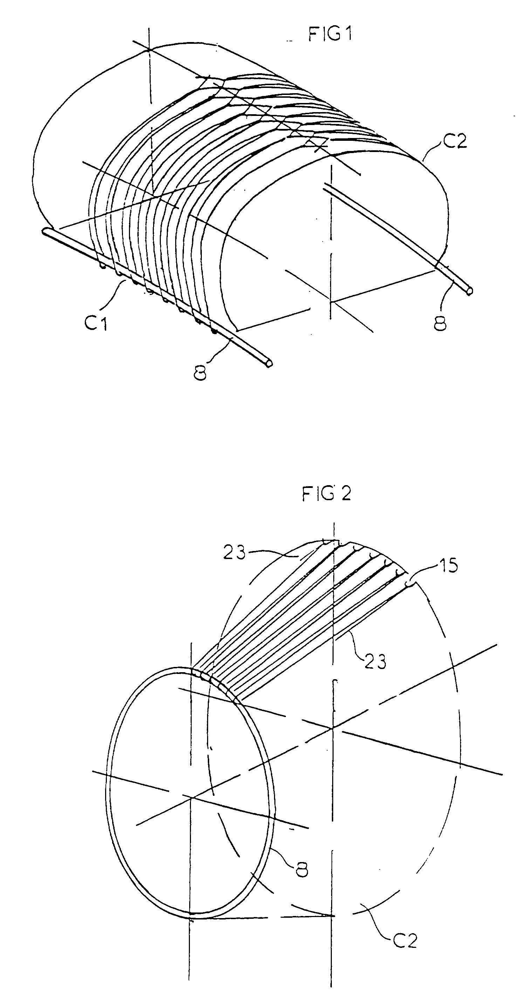

Le principe de réalisation d'un renforcement de carcasse, commun à toutes les variantes illustrant l'explication de l'invention, consiste à réaliser séparément deux demi-renforcements de carcasse C₁ et C₂ (voir figure 1). Chacun de ces demi-renforcements de carcasse est réalisé à partir d'un seul fil 23 (voir figure 2) qui contourne une tringle 8 et est accroché à des crochets 15 supportés par un anneau 14. La figure 2 montre l'allure que présente un demi-renforcement de carcasse C₂, à un certain stade de la fabrication. Dans la suite, on présente plusieurs méthodes permettant d'atteindre le stade montré à la figure 2, ainsi que différentes méthodes pour passer de ce stade à celui représenté par la figure 1.

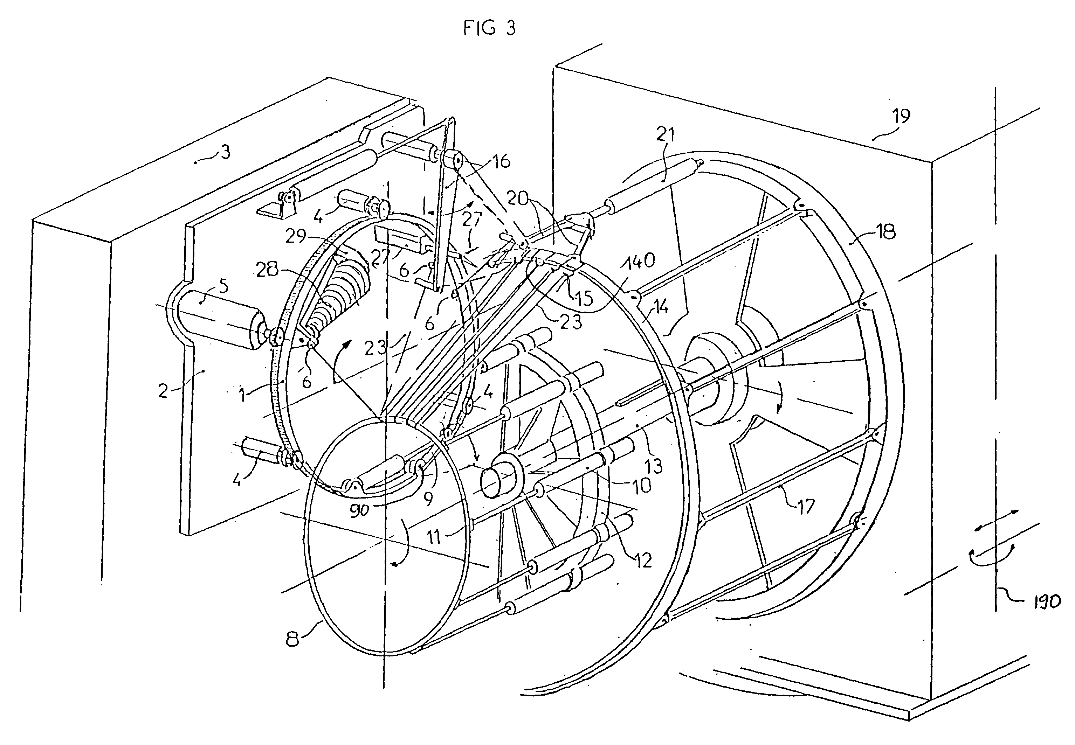

Un premier exemple de réalisation de l'invention est expliqué ci-dessous avec l'aide des figures 3 à 5. Ce premier exemple fonctionne selon le principe dit d'accrochage direct du fil sur les crochets 15 de l'anneau 14. Dans cette variante, le procédé comporte les étapes suivantes, destinées à accrocher le fil auxdits crochets :
- configurer lesdits moyens de pose pour qu'ils définissent une trajectoire se déployant dans un plan sensiblement perpendiculaire au plan de ladite tringle, ladite trajectoire passant dans l'espace central de la tringle et contournant celle-ci, ladite trajectoire coupant le plan de l'anneau et passant radialement à l'intérieur de celui-ci,
- fixer le fil audit premier crochet,
- animer lesdits moyens de pose le long de ladite trajectoire, tout en faisant tourner ladite tringle et ledit anneau de façon coordonné l'un par rapport à l'autre selon le pas de pose souhaité, et ainsi réaliser progressivement des enroulements de fil contournant ladite tringle et formant des boucles accrochées auxdits crochets,
- fixer le fil audit dernier crochet,
- escamoter lesdits moyens de pose.

De façon fort avantageuse, la trajectoire des moyens de pose est circulaire. C'est ce qui apparaît dans l'exemple décrit. Dans l'une des possibilités de réalisation, les moyens de pose comportent un logement destiné à recevoir une bobine de fil, et lesdits moyens de pose sont animés d'un mouvement toujours orienté dans la même direction, le mouvement étant ici circulaire.

Une machine construite pour mettre en oeuvre la variante de procédé qui vient d'être commentée est donc telle que lesdits moyens de pose comportent :
- un logement pour le montage d'une bobine de fil, ledit logement étant lié à des moyens de guidage définissant une trajectoire se déployant dans un plan perpendiculaire au plan de ladite tringle, ladite trajectoire passant dans l'espace central de la tringle et contournant celle-ci, ladite trajectoire coupant le plan de l'anneau et passant radialement à l'intérieur de celui-ci,
- des moyens de motorisation permettant de déplacer ledit logement le long de ladite trajectoire, tout en faisant tourner ladite tringle et ledit anneau de façon coordonné selon le pas de pose souhaité.

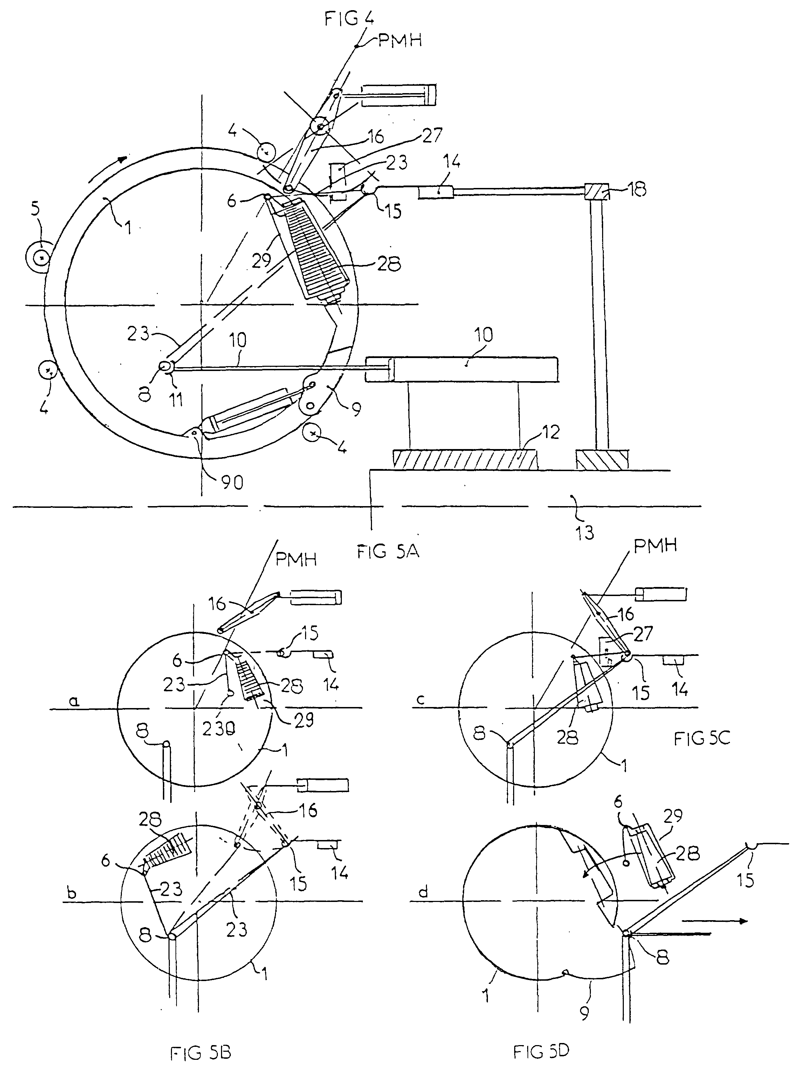

Aux différentes figures, on voit un pose-fil 1 de forme circulaire, supportant une bobine 28, centré axialement par trois galets 4 disposés à 120° l'un de l'autre et fixés sur un cadre 2 appartenant à un bâti 3 de la machine. Le porte-fil 1 est entrainé par un moteur 5. La bobine 28 est montée sur ledit pose-fil 1, dans un logement 29 adéquat. La longueur de fil sur la bobine 28 correspond à la longueur développée du fil constituant en totalité le demi-renforcement de carcasse, augmentée d'un excédent de sécurité qui évite un manque de fil avant que l'opération de fabrication du demi-renforcement ne soit complètement terminée. Le pose-fil 1 comporte aussi une section 9 basculant autour d'une charnière 90 afin de pouvoir créer une ouverture permettant d'insérer ou d'extraire une tringle 8. (Figure 3 et 4). On voit aussi un doigt mobile 16, monté sur le bâti 3.

Un bâti 19 supporte un arbre horizontal 13. L'arbre 13 supporte un volant 18 centré sur l'arbre 13 de la machine et monté coulissant sur celui-ci. Le bâti supporte également une couronne 12 elle aussi centrée sur l'arbre 13 de la machine et montée coulissante sur celui-ci. La couronne 12 porte à sa périphérie une série de vérins 10 actionnant des porte-tringle 11. Une tringle 8 peut être montée sur le porte-tringle 11.

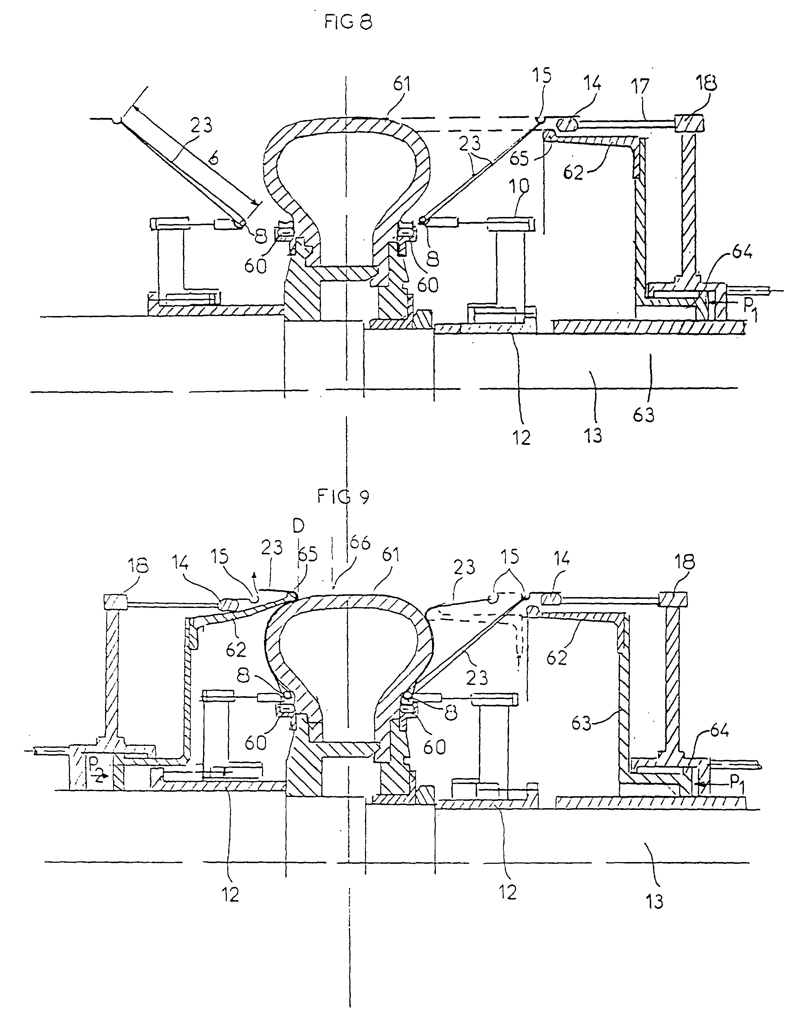

Le volant 18 reçoit ledit anneau 14. Celui-ci est porté par des bras flexibles 17 parallèles à l'axe de la machine. L'anneau 14 est fendu entre deux crochets. La fente définit ainsi deux lèvres 140 (voir figure 3). De part et d'autre de la fente, on trouve un premier crochet et un dernier crochet. L'anneau 14 est déformable élastiquement. Deux biellettes 20 commandées par un vérin 21 permettent d'écarter les lèvres 140 de la fente pour ouvrir l'anneau 14. Le bâti 19 est monté pivotant autour d'un axe vertical 190 pour tantôt présenter les organes qu'il supporte aux moyens de pose du fil, portés par le bâti 3, tantôt les présenter à un poste d'assemblage du demi-renforcement sur un noyau, selon des opérations explicitées plus loin en détails, avec l'aide des figures 8 ,9 et 10.

La réalisation d'un demi renforcement avec la machine selon la première variante comporte les opérations définies ci-après, le pose-fil 1 étant au départ dans la position PMH (Fig 5a).
1. Fixation de la bobine conique 28 dans le logement 29.
2. Accrochage de l'extrémité du fil 23 préalablement repliée pour former une boucle 230 sur l'un quelconque des crochets 15.
3. Démarrage de la rotation synchronisée de l'ensemble tringle 8 et anneau 14 avec le pose-fil 1; à chaque tour du pose-fil 1, l'anneau 14 et la tringle 8 se décalent angulairement de façon simultanée et continue d'un pas égal à la distance entre crochets 15.
4. En raison de la rotation du pose-fil 1 sur lui-même, à chaque tour, le fil 23 est enroulé autour de la tringle 8 (Fig 5b). Le doigt 16 est en attente hors de la trajectoire du fil 23. Au passage de la bobine 28 près de l'anneau 14, le fil est intercepté par le doigt 16 (Fig 5b et 5c). On forme ainsi une boucle que le doigt 16 amène un peu au delà du crochet 15 (Fig 5c) et la poursuite de la rotation de la bobine 28 permet l'accrochage du fil au crochet 15.
5. Considérant ensuite la rotation de la tringle 8 sur elle-même, notons que, lorsque l'un des porte-tringle 11 approche du pose-fil 1, le vérin 10 correspondant (Fig 3 et 4) s'escamote pour laisser le passage libre au pose-fil 1. Le vérin 10 revient en position de maintient de la tringle 8 après passage du pose-fil 1.
6. De proche en proche, on répète la séquence de base définie ci-dessus pour obtenir un demi-renforcement complet. Au plus tard avant de finir la fabrication dudit demi-renforcement, l'anneau 14 est ouvert suffisamment pour permettre la poursuite de l'accrochage jusque sur le crochet précédant celui sur lequel on a accroché le fil au tout début de l'opération, et ceci compte tenu de l'encombrement du pose-fil 1. Cette ouverture est commandée par le vérin 21, comme expliqué ci-dessus.
10. Le tout dernier accrochage est fait sur le crochet de départ en formant une boucle. On colle le fil 23 sur la boucle puis on coupe l'extrémité avec le couteau 27 (Fig 5).
11. On retire la bobine et on la remplace par une nouvelle bobine (Fig 5d).

Ce premier procédé, à accrochage direct du fil, peut être utilisé selon d'autres variantes quant aux moyens de stockage sur le pose-fil 1 de la quantité de fil nécessaire, par exemple en prévoyant un magasin embarqué sur le pose-fil 1, et alimenté automatiquement de la quantité nécessaire entre deux fabrications de demi-renforcement de carcasse.

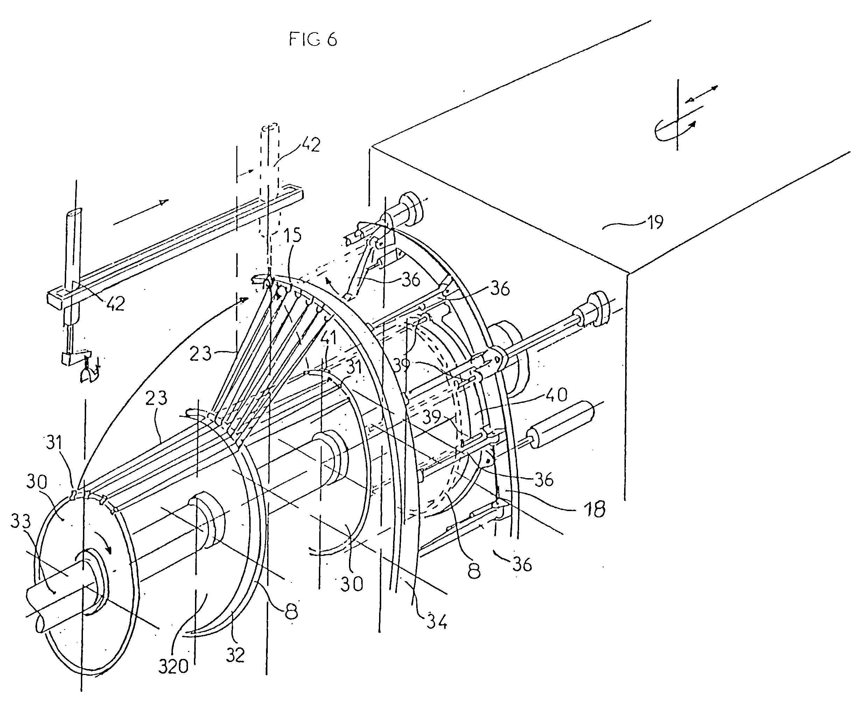

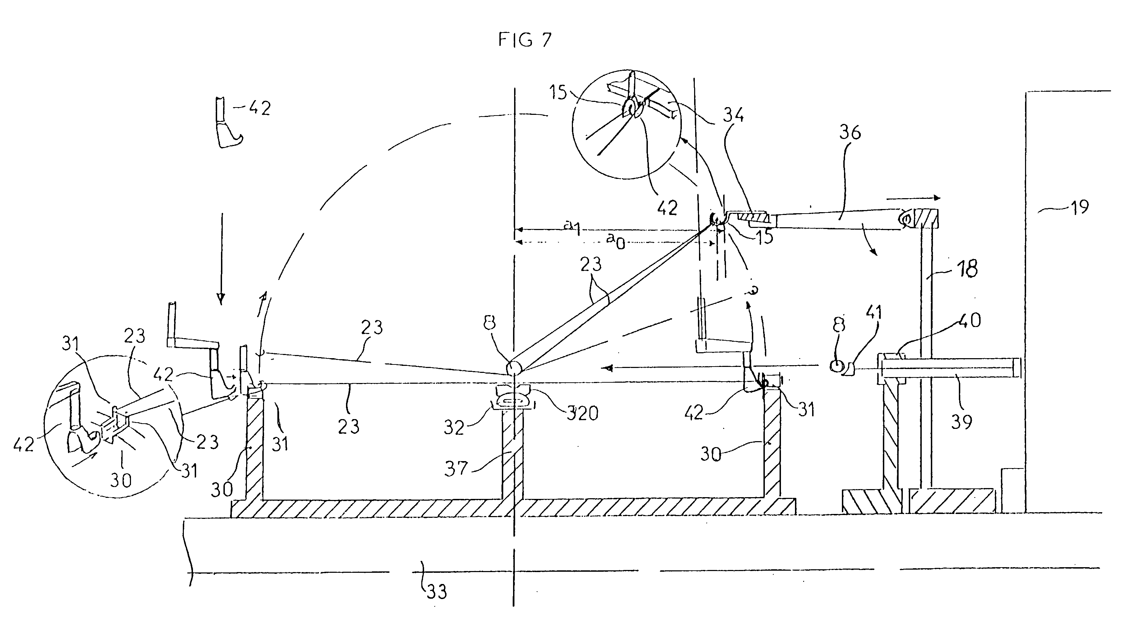

Une deuxième variante de réalisation de l'invention est explicitée ci-dessous (Fig 6 et 7). On reprend les mêmes références pour désigner des éléments identiques ou du moins procurant un fonction semblable. Dans cette variante, l'anneau 34, qui est cette fois continu circonférentiellement et rigide, supporte les crochets 15 substantiellement comme l'anneau 14. Dans cette variante, au lieu d'un accrochage direct du fil, on utilise un principe dit de pré-positionnement du fil. Selon cette deuxième variante, le procédé comporte les étapes suivantes, destinées à accrocher le fil auxdits crochets :
- le fil est accroché à des crochets auxiliaires disposés en deux cercles éloignés de la distance correspondant à deux fois la longueur de fil depuis la tringle jusqu'à l'extrémité dudit demi-renforcement de carcasse, de sorte que le fil définit ainsi dans l'espace une figure de révolution par une pluralité d'allers et de retours formant une boucle autour de chaque crochet auxiliaire de chaque cercle,
- enfiler ladite tringle radialement par dessus ladite figure de révolution, et la positionner à mi-distance des cercles de crochets auxiliaires,
- transférer lesdites boucles depuis lesdits crochets auxiliaires vers lesdits crochets en relevant le fil de part et d'autre de ladite tringle.

Une machine adaptée pour mettre en oeuvre cette deuxième variante du procédé est donc telle que les moyens de pose comportent :
- des crochets auxiliaires disposés en deux cercles éloignés d'une distance correspondant au double de la longueur de fil depuis la tringle jusqu'à l'extrémité dudit demi-renforcement de carcasse,
- des moyens de dévidage permettant d'accrocher le fil successivement auxdits crochets auxiliaires de chaque cercle,
- des moyens pour insérer ladite tringle radialement par dessus lesdits crochets auxiliaires et la positionner à mi-distance des cercles de crochets auxiliaires,
- des moyens de transfert auxiliaires pour transférer lesdites boucles depuis lesdits crochets auxiliaires vers lesdits crochets en relevant le fil de part et d'autre de ladite tringle.

Le bâti 19 supporte, via l'arbre 33, un ensemble comprenant ledit anneau 34 fermé et rigide, sur lequel les crochets 15 sont montés. L'anneau 34 est supporté par des bras escamotables 36, montés et articulés sur le volant 18. L'arbre 33 supporte également deux cerceaux 30 sur lesquels sont montés des crochets auxiliaires 31. Sur l'arbre 33 est positionné, à une distance appropriée entre les deux cerceaux 30, un flasque 37 qui porte une vessie gonflable 32.

Le fil 23 est accroché sur les crochets auxiliaires 31, par un mécanisme additionnel non représenté pour ne pas surcharger le dessin. Le fil 23 formera ainsi dans l'espace une sorte de cylindre. Après accrochage complet du fil 23 sur les crochets auxiliaires 31, la tringle 8 est mise en place par le porte-tringle 41 (Fig 6 et 7) actionné par les vérins 39. La tringle 8 est bloquée par la vessie 32, tout en pinçant les fils 23 entre la tringle 8 et un coussinet 320.

Deux pinces 42 (une pince de chaque côté de la tringle) prennent chacune les extrémités des tronçons que forme le fil 23, reposant sur chaque crochet auxiliaire 31, et positionnent ce fil sur les crochets 15 de l'anneau 34 fermé et rigide. D'une façon analogue à ce qui a été exposé ci-dessus à propos des porte-tringle 11, les bras escamotables 36 doivent être escamotés les uns après les autres pour ne pas gêner le mouvement de la pince 42. Notons par ailleurs qu'une seule et même pince pourrait être utilisée pour remplir la fonction de transfert des boucles depuis les crochets auxiliaires 31 vers les crochets 15. L'opération de transfert étant terminée, les vérins 10 viennent plaquer les porte-tringle 11 contre la tringle 8. La vessie 32 est alors dégonflée. Le bâti 19 recule et pivote de 180° pour présenter le demi-renforcement de carcasse au poste suivant comme déjà évoqué ci-dessus.

La suite de la description concerne la phase de pose de deux demi-renforcements carcasse sur un noyau.

Pour chacune des deux variantes décrites ci-dessus, il est envisageable de réaliser ladite pose des demi-renforcements par un dispositif à paroi cylindrique élastique (figures 8 et 9).

Un dispositif de pose du demi-renforcement inclut ledit anneau 14 muni des crochets 15, et supporté par le volant 18 coulissant sur l'arbre 13, avance axialement de sa position initiale jusqu'à l'axe du noyau 61 (figure 8). Une paroi cylindrique élastique 62 est soutenue par une entretoise 63. Celle-ci prend appui sur le volant 18 par l'intermédiaire d'un vérin pneumatique 64. Le vérin pneumatique 64 est soumis à une première pression P1 permettant, quelle que soit la position d'avancement de l'anneau 14, de maintenir les fils 23 constituant le demi-renforcement à une longueur (b) et à une tension constante T1. La tension T1 dépend de la pression P1 affichée dans le vérin 64. Lorsque la paroi cylindrique élastique 62 vient en contact avec le noyau 61 (figure 9), la pression dans le vérin 64 est augmentée jusqu'à une pression P2, provoquant une dilatation de ladite paroi cylindrique élastique. L'anneau 14 continue d'avancer vers le noyau 61.

Les fils 23 sont ainsi appliqués et maintenus contre le noyau 61. Lorsque le bec 65 de ladite paroi cylindrique élastique a atteint le point D, ledit bec passe au dessus de la position du crochet 15 ce qui libère les fils 23 des crochets 15. La pression P2 pousse la paroi cylindrique élastique jusqu'à la position de pose des fils 23 (figure 9). Le demi-renforcement étant appliqué contre le noyau 61, la paroi cylindrique élastique 62 revient à sa position initiale.

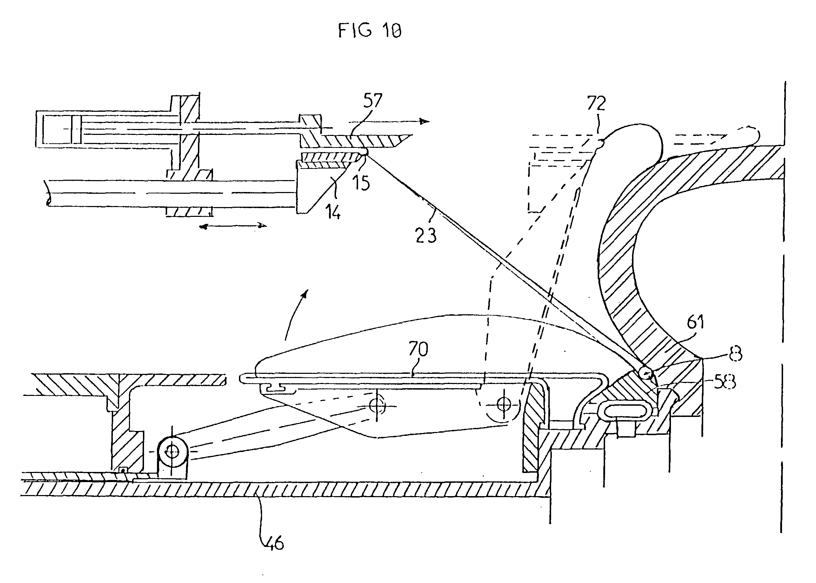

Une autre possibilité pour relier deux demi-renforcements carcasse fait appel à l'emploi d'une vessie gonflable 70 (figure 10).

Dans la variante de la figure 10, une vessie 70 est gonflée pour appliquer les fils 23 de chaque demi-renforcement contre le noyau 61, avec l'action combinée de lames de relevage 71. L'anneau 14 se déplace axialement pour accompagner le mouvement des fils 23.

Une virole 57 ferme l'ouverture de passage des crochets 15 et empêche le fil 23 de sortir du crochet. En partie finale de retroussage, les fils 23 viennent en contact sur le noyau sous l'action de la vessie 70. La virole 57 est alors escamotée en positon 72 pour permettre au fil 23 de se dégager des crochets 15. La virole 57 avance de nouveau vers le sommet du noyau 61 en poussant la vessie 70, ce qui permet de terminer la pose des fils 23 sur le noyau 61.

La suite de la description concerne la liaison des deux demi-renforcements de carcasse au sommet du futur pneumatique.

Sous la bande de roulement, on sait que les efforts de traction dans les fils constituant le renforcement d'un carcasse radiale sont faibles ou nuls. On dispose donc d'une grande latitude dans le choix des moyens de liaison. Si le pneumatique est réalisé avec un enrobage carcasse en caoutchouc, on utilise de préférence un noyau définissant la forme interne du pneumatique, au moins approximativement. Ce noyau est pré-revêtu de caoutchouc non vulcanisé. Il suffit donc de déposer les dites boucles sur le revêtement en caoutchouc au besoin en les pressant quelque peu pour assurer la stabilité de renforcement de carcasse pendant sa fabrication. Si la carcasse est confectionnée par injection ou coulée d'un matériau élastomérique à l'état liquide, par exemple du polyuréthanne, il est nécessaire d'assurer une fixation provisoire des deux demi-renforcements de carcasse avant de refermer le moule et de procéder à l'introduction de l'élastomère. Par la suite, et quelle que soit la nature de la matrice, l'imprégnation des fils dans la matrice assure la cohésion nécessaire.

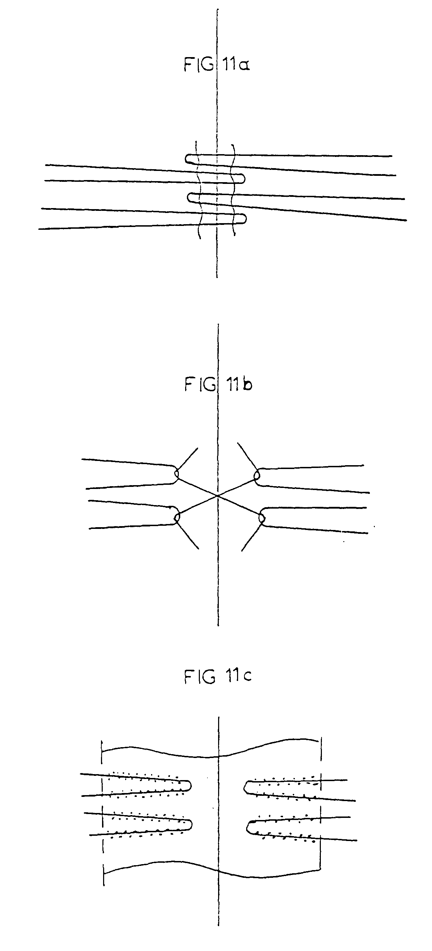

Les boucles peuvent être soit posées face à face (Fig 11b et 11c), soit posées côte à côte (Fig 11a). Pour assurer la liaison, on peut utiliser notamment un dispositif d'assemblage des demi-renforcements par couture (Fig 11a), ou par laçage (Fig 11b) en passant alternativement d'une boucle à l'autre avec un ou deux lacets. On peut encore assurer une liaison par collage (Fig 11c) (par exemple par pulvérisation de colle permet de solidariser au sommet les deux demi-renforcements, avec ou sans bandelette ou par tout autre moyen assurant un maintien en tension).

Le procédé décrit permet d'obtenir une précontrainte de tension dans les fils composant le renforcement de carcasse, c'est à dire que lesdits fils sont sous tension en dehors de l'effet dû à une pression de gonflage du pneumatique. On peut obtenir cette tension par dilatation thermique ou électromagnétique ou mécanique d'un noyau, ou par une pose des demi-renforcements avec pré-tension des fils, ou encore en combinant les trois effets. Cette précontrainte de tension dépend des caractéristiques mécaniques souhaitées dans le renforcement de la carcasse.

## Revendications

1. Procédé de fabrication d'un demi-renforcement de carcasse de pneumatique à partir d'un seul fil contournant une tringle, consistant à :
- maintenir ladite tringle de pneumatique,
- positionner un anneau à une distance prédéterminée de ladite tringle, de façon approximativement coaxiale, les plans de ladite tringle et dudit anneau étant sensiblement parallèles, ledit anneau comportant autant de crochets que le demi-nombre d'arceaux de fil de carcasse contenus dans le pneumatique que l'on souhaite fabriquer,
- accrocher le fil auxdits crochets grâce à des moyens de pose dudit fil en relation de guidage avec ledit fil, en formant une boucle dont les deux brins sont dirigés vers la tringle et la contournent, chacun des brins rejoignant le crochet adjacent au delà du contournement de la tringle,
- positionner un support définissant sensiblement la forme de la cavité interne dudit pneumatique de façon à ce que ladite tringle prenne sa place finale latéralement par rapport audit support, ledit support étant positionné par rapport à la tringle du côté opposé par rapport audit anneau,
- enlever lesdites boucles des crochets et les transférer sur le support.

2. Procédé selon la revendication 1, dans lequel ledit anneau est fendu entre deux crochets, définissant ainsi deux lèvres de fente et, de part et d'autre de celle-ci, un premier crochet et un dernier crochet, ledit anneau étant déformable de façon à pouvoir écarter les lèvres de la fente pour laisser entre lesdits premier et dernier crochets un espace suffisant pour le passage desdits moyens de pose du fil.

3. Procédé selon la revendication 2, comportant les étapes suivantes destinées à accrocher le fil auxdits crochets :
- configurer lesdits moyens de pose pour qu'ils définissent une trajectoire se déployant dans un plan sensiblement perpendiculaire au plan de ladite tringle, ladite trajectoire passant dans l'espace central de la tringle et contournant celle-ci, ladite trajectoire coupant le plan de l'anneau et passant radialement à l'intérieur de celui-ci,
- fixer le fil audit premier crochet,
- animer lesdits moyens de pose le long de ladite trajectoire, tout en faisant tourner ladite tringle et ledit anneau de façon coordonné l'un par rapport à l'autre selon le pas de pose souhaité, et ainsi réaliser progressivement des enroulements de fil contournant ladite tringle et formant des boucles accrochées auxdits crochets,
- fixer le fil audit dernier crochet,
- escamoter lesdits moyens de pose.

4. Procédé selon la revendication 3, dans lequel ladite trajectoire est circulaire.

5. Procédé selon l'une des revendications 3 ou 4, dans lequel lesdits moyens de pose comportent un logement destiné à recevoir une bobine de fil, et dans lequel lesdits moyens de pose sont animés d'un mouvement toujours orienté dans la même direction.

6. Procédé selon la revendication 1, comportant les étapes suivantes destinées à accrocher le fil auxdits crochets :
- le fil est accroché à des crochets auxiliaires disposés en deux cercles éloignés de la distance correspondant à deux fois la longueur de fil depuis la tringle jusqu'à l'extrémité dudit demi-renforcement de carcasse, de sorte que le fil définit ainsi dans l'espace une figure de révolution par une pluralité d'allers et de retours formant une boucle autour de chaque crochet auxiliaire de chaque cercle,
- enfiler ladite tringle radialement par dessus ladite figure de révolution, et la positionner à mi-distance des cercles de crochets auxiliaires,
- transférer lesdites boucles depuis lesdits crochets auxiliaires vers lesdits crochets en relevant le fil de part et d'autre de ladite tringle.

7. Procédé de fabrication d'un renforcement de carcasse de pneu, consistant à fabriquer séparément deux demi-renforcements de carcasse selon le procédé de la revendication 1, lesdits demi-renforcements de carcasse étant positionnés concentriquement et de part et d'autre dudit support, et consistant à poser lesdites boucles sur le support et consistant à relier les boucles d'un des demi-renforcement de carcasse aux boucles de l'autre demi-renforcement de carcasse.

8. Machine de fabrication d'un demi-renforcement de carcasse de pneumatique à partir d'un seul fil (23) contournant une tringle (8), comportant :
- un dispositif central permettant de maintenir ladite tringle de pneumatique dans une position prédéterminée,
- un dispositif latéral destiné à recevoir un anneau (14) comportant autant de crochets (15) que le demi-nombre d'arceaux de fil de carcasse contenus dans le pneumatique que l'on souhaite fabriquer, ledit dispositif latéral maintenant ledit anneau à une distance prédéterminée de ladite tringle (8), de façon approximativement concentrique à celle-ci, les plans de ladite tringle (8) et dudit anneau (14) étant sensiblement parallèles, lesdits crochets (15) étant répartis le long de la circonférence de l'anneau (14),
- des moyens de pose du fil pour accrocher le fil auxdits crochets en formant une boucle dont les deux brins sont dirigés vers la tringle et la contournent, chacun des brins rejoignant le crochet adjacent au delà du contournement de la tringle.

9. Machine selon la revendication 8, dans laquelle ledit anneau est fendu entre deux crochets, définissant ainsi aux lèvres (140) de fente et, de part et d'autre de celles-ci, un premier crochet et un dernier crochet, et comportant des moyens d'écartement des lèvres de la fente de façon suffisante pour laisser entre lesdits premier et dernier crochets un espace pour le passage desdits moyens de pose du fil.

10. Machine selon la revendication 9, dans laquelle lesdits moyens de pose comportent :
- un logement (29) pour le montage d'une bobine (28) de fil, ledit logement (29) étant lié à des moyens de guidage définissant une trajectoire se déployant dans un plan perpendiculaire au plan de ladite tringle, ladite trajectoire passant dans l'espace central de la tringle (8) et contournant celle-ci, ladite trajectoire coupant le plan de l'anneau et passant radialement à l'intérieur de celui-ci,
- des moyens de motorisation permettant de déplacer ledit logement (29) le long de ladite trajectoire, tout en faisant tourner ladite tringle (8) et ledit anneau (14) de façon coordonné selon le pas de pose souhaité.

11. Machine selon la revendication 10, dans laquelle ladite trajectoire est sensiblement circulaire et lesdits moyens de motorisation sont animés d'un mouvement toujours orienté dans la même direction pour la pose du fil.

12. Machine selon la revendication 8, dans laquelle les moyens de pose comportent :
- des crochets auxiliaires (31) disposés en deux cercles éloignés d'une distance correspondant au double de la longueur de fil depuis la tringle jusqu'à l'extrémité dudit demi-renforcement de carcasse,
- des moyens de dévidage permettant d'accrocher le fil successivement auxdits crochets auxiliaires de chaque cercle,
- des moyens pour insérer ladite tringle radialement par dessus lesdits crochets auxiliaires et la positionner à mi-distance des cercles de crochets auxiliaires,
- des moyens de transfert auxiliaires pour transférer lesdites boucles depuis lesdits crochets auxiliaires vers lesdits crochets en relevant le fil de part et d'autre de ladite tringle (8).

13. Machine selon la revendication 8, dans laquelle ledit dispositif central comporte un support monté concentriquement et latéralement par rapport à la tringle, ledit support définissant sensiblement la forme de la cavité interne dudit pneumatique, ledit support étant positionné par rapport à la tringle du côté opposé par rapport audit anneau, ladite machine comportant des moyens de pose desdites boucles sur le support.

14. Machine selon la revendication 13, dans laquelle les moyens de pose des boucles comprennent au moins un bras muni d'une pince permettant de saisir les boucles les unes après les autres.

15. Machine selon la revendication 13, dans laquelle les moyens de pose des boucles comprennent au moins une paroi cylindrique élastique (62).

16. Machine selon la revendication 13, dans laquelle les moyens de pose des boucles comprennent une vessie gonflable (70).

## Claims

1. A process for manufacturing a half-carcass reinforcement for a tyre from a single cord passing around a bead wire, consisting of:
- holding said tyre bead wire,
- positioning a ring at a predetermined distance from said bead wire, approximately coaxially, the planes of said bead wire and said ring being substantially parallel, said ring comprising as many hooks as half the number of arches of carcass cord contained in the tyre which it is desired to manufacture,
- hooking the cord to said hooks by means of laying means for said cord in a guiding relation with said cord, forming a loop, the two strands of which are directed towards the bead wire and pass around it, each of the strands joining the adjacent hook beyond where they pass around the bead wire,
- positioning a support substantially defining the shape of the inner cavity of said tyre such that said bead wire adopts its final place laterally relative to said support, said support being positioned relative to the bead wire on the opposite side relative to said ring,
- removing said loops from the hooks and transferring them to the support.

2. A process according to Claim 1, in which said ring is slit between two hooks, thus defining two lips of the slit and, on either side of the latter, a first hook and a last hook, said ring being deformable so as to be able to move the lips apart from the slit in order to leave sufficient space for said cord laying means to pass through between said first and last hooks.

3. A process according to Claim 2, comprising the following steps which are intended to hook the cord to said hooks:
- configuring said laying means so that they define a trajectory in a plane substantially perpendicular to the plane of said bead wire, said trajectory passing into the central space of the bead wire and passing around the latter, said trajectory intersecting the plane of the ring and passing radially into the latter,
- fastening the cord to said first hook,
- moving said laying means along said trajectory, while making said bead wire and said ring rotate in coordinated manner relative to each other according to the laying pitch desired, and thus gradually effecting windings of cord passing around said bead wire and forming loops hooked to said hooks,
- fastening the cord to said final hook,
- retracting said laying means.

4. A process according to Claim 3, in which said trajectory is circular.

5. A process according to one of Claims 3 or 4, in which said laying means comprise a housing intended to receive a cord spool, and in which said laying means are moved in a movement which is always in the same direction.

6. A process according to Claim 1, comprising the following steps intended to hook the cord to said hooks:
- the cord is hooked to auxiliary hooks arranged in two circles separated by a distance corresponding to twice the length of cord from the bead wire to the end of said half-carcass reinforcement, such that the cord thus defines in space a figure of revolution by a plurality of forward and return paths forming a loop about each auxiliary hook of each circle,
- said bead wire is slid radially over said figure of revolution, and is positioned halfway between the circles of auxiliary hooks,
- said loops are transferred from said auxiliary hooks to said hooks by picking up the cord on either side of said bead wire.

7. A process for manufacturing a tyre carcass reinforcement, consisting of separately manufacturing two half-carcass reinforcements in accordance with the process of Claim 1, said half-carcass reinforcements being positioned concentrically and on either side of said support, and consisting of laying said loops on the support and consisting of joining the loops of one of the half-carcass reinforcements to the loops of the other half-carcass reinforcement.

8. A machine for manufacturing a half-carcass reinforcement for a tyre from a single cord (23) passing around a bead wire (8), comprising:
- a central device making it possible to hold said tyre bead wire in a predetermined position,
- a lateral device intended to receive a ring (14) comprising as many hooks (15) as half the number of arches of carcass cord contained in the tyre which it is desired to manufacture, said lateral device holding said ring at a predetermined distance from said bead wire (8), approximately concentrically thereto, the planes of said bead wire (8) and of said ring (14) being substantially parallel, said hooks (15) being distributed along the circumference of the ring (14),
- laying means for the cord for hooking the cord to said hooks, forming a loop, the two strands of which are directed towards the bead wire and pass around it, each of the strands joining the hook adjacent beyond where they pass around the bead wire.

9. A machine according to Claim 8, in which said ring is slit between two hooks, thus defining two lips (140) of the slit and, on either side of the latter, a first hook and a last hook, and comprising means for moving the lips apart from the slit sufficiently to leave space for said cord laying means to pass though between said first and last hooks.

10. A machine according to Claim 9, in which said laying means comprise:
- a housing (29) for mounting a cord spool (28), said housing (29) being linked to guide means defining a trajectory in a plane perpendicular to the plane of said bead wire, said trajectory passing into the central space of the bead wire (8) and passing around the latter, said trajectory intersecting the plane of the ring and passing radially into the latter,
- motor drive means making it possible to displace said housing (29) along said trajectory, while making said bead wire (8) and said ring (14) rotate in coordinated manner according to the laying pitch desired.

11. A machine according to Claim 10, in which said trajectory is substantially circular and said motor drive means are moved in a movement which is always in the same direction, for laying the cord.

12. A machine according to Claim 8, in which the laying means comprise:
- auxiliary hooks (31) arranged in two circles spaced apart by a distance corresponding to twice the length of cord from the bead wire to the end of said half-carcass reinforcement,
- unwinding means making it possible to hook the cord successively to said auxiliary hooks of each circle,
- means for inserting said bead wire radially over said auxiliary hooks and positioning it halfway between the circles of auxiliary hooks,
- auxiliary transfer means for transferring said loops from said auxiliary hooks to said hooks by picking up the cord on either side of said bead wire (8).

13. A machine according to Claim 8, in which said central device comprises a support mounted concentrically and laterally relative to the bead wire, said support substantially defining the shape of the inner cavity of said tyre, said support being positioned relative to the bead wire on the side opposite said ring, said machine comprising means laying for said loops on the support.

14. A machine according to Claim 13, in which the laying means for the loops comprise at least one arm provided with a clamp which makes it possible to grip the loops one after another.

15. A machine according to Claim 13, in which the laying means for the loops comprise at least one elastic cylindrical wall (62).

16. A machine according to Claim 13, in which the laying means for the loops comprise an inflatable bladder (62).

## Patentansprüche

1. Verfahren zur Herstellung einer Reifenkarkassen-Halbverstärkung aus einem einzigen Draht, der um einen Wulstkern herumläuft, bestehend aus:
- Halten des genannten Wulstkernes des Reifens,
- Positionieren eines Rings in einem bestimmten Abstand vom Wulstkern in etwa koaxialer Weise, wobei die Ebenen des genannten Wulstkernes und des genannten Ringes etwa parallel sind, und der genannte Ring soviele Haken wie die halbe Anzahl von Bögen des Karkassendrahtes aufweist, die im Reifen enthalten sind, den man herzustellen wünscht,
- Einhaken des Drahtes in die genannten Haken dank Mitteln zum Verleges des genannten Drahtes in Zuordnung zur Führung des genannten Drahtes, indem man eine Schlaufe bildet, deren beide Schenkel gegen den Wulstkern und die Herumführung gerichtet sind, wobei jeder der Schenkel jenseits der Herumführung auf den benachbarten Haken trifft,
- Positionieren einer Unterlage, die im wesentlichen die Form des Innenhohlraums des genannten Reifens derart definiert, daß der genannte Wulstkern seinen endgültigen Platz seitlich bezüglich der genannten Unterlage einnimmt, wobei die genannte Unterlage bezüglich des Wulstkernes auf der entgegengesetzten Seite bezüglich des genannten Ringes angeordnet ist, und
- Abheben der genannten Schlaufen und ihre Übertragung auf die Unterlage.

2. Verfahren nach Anspruch 1, worin der genannte Ring zwischen zwei Haken geschlitzt ist und so zwei Lippen eines Schlitzes und beiderseits dessen einen ersten Haken und einen letzten Haken bildet, und der genannte Ring derart verformbar ist, daß er die Lippen des Schlitzes auseinanderspreizen kann, um zwischen dem genannten ersten und letzten Haken einen Zwischenraum zu belassen, der für den Durchtritt der genannten Mittel zum Verlegen des Drahtes ausreicht.

3. Verfahren nach Anspruch 2, mit den folgenden Schritten, die dazu bestimmt sind, die Drähte in die genannten Haken einzuhaken:
- Ausbilden der genannten Verlegemittel derart, daß sie eine Bewegungsbahn definieren, die sich in einer Ebene entfaltet, die etwa senkrecht zur Ebene des genannten Wulstkernes verläuft, wobei die Bewegungsbahn durch den mittigen Raum des Wulstkernes hindurchläuft und um diesen herumläuft, und wobei die genannte Bewegungsbahn die Ebene des Ringes schneidet und radial in dessen Inneren hindurchläuft.
- Fixieren des Drahtes am genannten, ersten Haken,
- Bewegen der genannten Verlegemittel längs der genannten Bewegungsbahn, während man den genannten Wulstkern und den genannten Ring aufeinander abgestimmt entsprechend der gewünschten Verlegeteilung drehen läßt, und so allmählich Herstellen von Drahtwindungen, die um den genannten Wulstkern herumlaufen und Schlaufen bilden, die in die genannten Halken eingehakt sind,
- Fixieren des Drahtes am letzten Haken, und
- Einziehen der genannten Verlegemittel.

4. Verfahren nach Anspruch 3, worin die genannte Bewegungsbahn kreisförmig ist.

5. Verfahren nach einem der Ansprüche 3 oder 4, worin die genannten Verlegemittel einen Sitz aufweisen, der dazu bestimmt ist, eine Drahtspule aufzunehmen, und in worin die genannten Verlegemittel zu einer Bewegung angeregt sind, die immer in derselben Richtung orientiert ist.

6. Verfahren nach Anspruch 1, mit den folgenden Schritten, die dazu bestimmt sind, den Draht in die genannten Haken einzuhalen:
- der Haken wird in Hilfshaken eingehängt, die in zwei Kreisen angeordnet sind, die um einen Abstand entfernt sind, der dem zweifachen der Länge des Drahtes vom Wulstkern bis zum Ende der genannten Karkassen-Halbverstärkung entspricht, derart, daß der Draht so im Raum eine Rotationsfigur durch eine Vielzahl von Hin- und Rückbewegungen definiert, wobei er eine Schlaufe um jeden Hilfshaken eines jeden Kreises bildet,
- Einfädeln des genannten Wulstkernes radial von oberhalb der genannten Rotationsfigur und seine Anordnung auf mittlerem Abstand der Kreise der Hilfshaken, und
- Überführen der genannten Schlaufen von den genannten Hilfshaken zu den genannten Haken, indem man den Draht beiderseits des genannten Wulstkernes anhebt.

7. Verfahren zur Herstellung einer Reifen-Karkassenverstärkung, das darin besteht, gesondert zwei Karkassen-Halbverstärkungen herzustellen, nach dem Verfahren des Anspruchs 1, worin die beiden Karkassen-Halbverstärkungen konzentrisch beiderseits der genannten Unterlage angeordnet werden, darin besteht, daß man die genannten Schlaufen auf die Unterlage auflegt, und darin besteht, daß man die Schlaufen einer der Karkassen-Halbverstärkungen mit den Schlaufen der anderen Karkassen-Halbverstärkung verbindet.

8. Maschine zur Herstellung einer Halbverstärkung der Karkasse eines Reifens aus einem einzigenDraht bzw. Faden (23), der einen Wulstkern (8) umläuft, mit:
- einer mittleren Vorrichtung, die es gestattet, den genannten Wulstkern eines Reifens in einer vorbestimmten Lage zu halten,
- einer seitlichen Vorrichtung, die dazu bestimmt ist, einenRing (14) aufzunehmen, der ebensoviele Haken (15) aufweist, wie die halbe Anzahl der Bögen von Karkassendraht, die im Reifen enthalten sind, den man herzustellen wünscht, wobei die seitliche Vorrichtung den genannten Ring auf einem vorbestimmten Abstand vom genannten Wulstkern (8) zu diesem etwa konzentrisch hält, die Ebenen des genannten Wulstkernes (8) und des genannten Ringes (14) etwa parallel sind, und die genannten Haken (15) längs des Umfangs des Ringes (14) verteilt sind, und
- Mittel zum Verlegen des Drahtes, um den Draht an dem genannten Haken einzuhängen, indem man eine Schlaufe bildet, deren beide Schenkel gegen den Wulstkern und die Herumführung gerichtet sind, wobei jeder der Schenkel jenseits der Herumführung um den Wulstkern auf den benachbarten Haken trifft.

9. Maschine nach Anspruch 8, worin der genannte Ring zwischen zwei Haken geschlitzt ist und so Schlitzlippen (140) bildet, sowie beiderseits deren einen ersten Haken und einen letzten Haken und Mittel zum Auseinanderbewegen der Lippen des Schlitzes in ausreichender Weise aufweist, um zwischen dem genannten ersten und letzten Haken einen Raum für den Durchtritt der genannten Draht-Verlegemittel zu belassen.

10. Maschine nach Anspruch 9, in welcher die Verlegemittel die folgenden Merkmale aufweisen:
- einen Sitz (29) für die Anbringung einer Drahtspule (28), wobei der genannte Sitz (29) mit Führungsmitteln verbunden ist, die eine Bewegungsbahn definieren, die sich in einer Ebene entfaltet, die senkrecht zur Ebene des genannten Wulstkerns verläuft, wobei die genannte Bewegungsbahn durch den mittigen Raum des Wulstkerns (8) hindurchläuft und diesen umrundet, während die genannte Bewegungsbahn die Ebene des Ringes schneidet und radial in dessen Inneren hindurchläuft, und
- Motorisierungsmittel, die es gestatten, den genannten Sitz (29) längs der genannten Bewegungsbahn zu versetzen, während man gleichzeitig den genannten Wulstkern (8) und den genannten Ring (14) in koordinierter Weise entsprechend der gewünschten Verlegeteilung rotieren läßt.

11. Maschine nach Anspruch 10, worin die genannte Bewegungsbahn im wesentlichen kreisförmig ist, und die genannten Motorisierungsmittel zu einer Bewegung erregt sind, die stets für das Verlegen des Drahtes in derselben Richtung orientiert ist.

12. Maschine nach Anspruch 8, worin die Verlegemittel die folgenden Merkmale aufweisen:
- Hilfshaken (31), die in zwei Kreisen angeordnet sind, die um einen Abstand entfernt sind, der dem Doppelten der Länge des Drahtes vom Wulstkern bis zum Ende der genannten Karkassen-Halbverstärkung entspricht,
- Abhaspelmittel, die es gestatten, den Draht aufeinanderfolgend in die genannten Hilfshaken eines jeden Kreises einzuhaken,
- Mittel zum Einführen des genannten Wulstkerns radial von oberhalb der genannten Hilfshaken und zu dessen Positionieren bei mittlerem Abstand der Kreise der Hilfshaken, und
- Hilfs-Überführungsmittel zum Überführen der genannten Schlaufen von den genannten Hilfshaken zu den genannten Haken, indem man den Draht beiderseits des genannten Wulstkerns (8) anhebt.

13. Maschine nach Anspruch 8, worin die genannte mittlere Vorrichtung eine Unterlage aufweist, die konzentrisch und seitlich bezüglich des Wulstkernes angebracht ist, wobei die genannte Unterlage etwa die Form des Innenhohlraums des genannten Reifens bildet, die genannte Unterlage bezüglich des Wulstkernes auf der im Verhältnis zum genannten Ring entgegengesetzten Seite angeordnet ist, und die genannte Maschine Mittel zum Auflegen der genannten Schlaufen auf die Unterlage aufweist.

14. Maschine nach Anspruch 13, worin die Mittel zum Auflegen der Schlaufen mindestens einen Arm aufweisten, der mit einer Zange versehen ist, die es gestattet, die Schlaufen nacheinander zu ergreifen.

15. Maschine nach Anspruch 13, worin die Mittel zum Auflegen der Schlaufen mindestens eine elastische, zylindrische Wand (62) aufweisen.

16. Maschine nach Anspruch 13, worin die Mittel zum Auflegen der Schlaufen mindestens eine aufpumpbare Blase (70) aufweisen.
